# EUROPEAN PATENT SPECIFICATION

(11) **EP 2 255 746 B1**
(45) Date of publication and mention of the grant of the patent: **06.08.2014**
(21) Application number: 10155285.9
(22) Date of filing: 03.03.2010
(51) Int. Cl.: A61C 8/00

(54) **Implant fixture remover**
Implantatbefestigungsentferner
Extracteur pour fixation d'implant

(30) Priority: 30.05.2009 KR 20090047879; 28.10.2009 KR 20090102550
(43) Date of publication of application: 01.12.2010
(73) Proprietor: Heo, Young Ku, Seoul 138-771 (KR)
(72) Inventor: Heo, Young Ku, Seoul 138-771 (KR)
(74) Representative: Nederlandsch Octrooibureau

(56) References cited:
- EP-A1- 1 396 236
- US-A1- 2006 029 907
- US-B1- 7 179 084

## Description

### CROSS-REFERENCE TO RELATED APPLICATIONS

This application claims the benefit of Korean Patent Application No. 10-2009-0047897 filed with the Korean Intellectual Property Office on May. 29, 2009.

### BACKGROUND

### 1. Field of the Invention

The present invention relates to a medical fixture remover for dental, plastic surgical, and orthopedic applications, which is used to remove a fixture screwed to a human bone and fused to the bone for the reason of failure in bone generation or loss of a bone around an implant, and more particularly, to an implant fixture remover which can separate and remove a fixture from a human bone safely and rapidly with simple and standardized treatment, which can separate the fixture from the human bone safely to enhance the safety of treatment when a fixture connector is damaged with an excessive torque in the course of implanting the fixture and thus cannot be inserted or pulled out any more, and which can greatly reduce the time for the treatment.

### 2. Description of the Related Art

An implant generally means a transplant, an insert, or an artificial device made to be replaced for a lost biological tissue or to serves as the tissue.

A dental implant serves to recover the original function of a tooth by implanting an artificial dental root formed of an alloy of titanium or the like, which a human body does not show an adverse reaction to, into an alveolar bone from which the tooth is pulled out instead of a dental root of a lost tooth, fusing the artificial dental root to the alveolar bone, and fixing an artificial tooth thereto. That is, the dental implant indicates a substitute of a lost natural tooth or means a dental treatment of recovering the original function of a tooth by fastening a screwed fixture to an alveolar bone, fusing the fixture to the bone for about 3 to 8 months, and then fixing an abutment as a bonding portion and a prosthesis such as an artificial tooth crown thereto.

The implant treatment is roughly divided into a soft tissue incision and removal operation, a bone removing operation, an implant planting operation, and an upper prosthesis forming operation. The soft tissue incision and removal operation is substantially similar to a general operation. The bone removing operation is a process of removing a compact bone and removing a cancellous bone. In the process, basically, the bone to be subjected to the planting is trimmed, a planting site is marked, a hole is formed in the alveolar bone and sequentially widened up to a diameter slightly smaller than the diameter of an implant to be planted, and then the implant is planted thereto.

On the other hand, in the process of planting a fixture, a fixture connector may be damaged due to an excessive torque and thus may not be inserted or pulled out any more. A fixture inserted into a human bone and successfully fused to the bone may not be retained any more due to the loss of the bone around the implant resulting from an inflammation caused around the implant with the lapse of time. In these cases, the fixture has to be removed or separated from the human bone. A removing torque necessary to screw off the implant fused to the bone is about 100 to 500 Ncm. In the past, since a tool for removing the fixture with such a magnitude of torque was not provided, the bone around the fixture was greatly destroyed and then the fixture was separated and removed.

However, when the bone around the fixture was cut out and the fixture was removed in this way, a fixture could not be re-planted due to the great loss of the bone or another bone transplanting operation had to be performed to reconstruct the destroyed bone. Accordingly, the operation was made to be greatly complex, thereby causing inconvenience to a patient and elongating the treatment time.

A dental removing apparatus is known from US 7179084.

### SUMMARY

The invention is as claimed in claim 1.

An advantage of some aspects of the invention is that it provides an implant fixture remover which can apply a strong removing torque of the maximum 1,000 Ncm to a damaged implant fused to a bone so as to rapidly remove a fixture with a simple and standardized treatment while minimizing the removal or damage of a bone around the fixture, thereby guaranteeing the convenience and safety for use.

Another advantage of some aspects of the invention is that it provides an implant fixture remover which can improve the safety of treatment by safely removing a fixture without cutting out the surrounding alveolar bone and can greatly reduce the time for the treatment, when a fixture connector is damaged due to an excessive torque in the process of planting the fixture and cannot be inserted or pulled out any more.

According to the invention, there is provided an implant fixture remover for removing an implant fixture from a biological bone, including: a remover screw including a coupling screw portion screwed to a female screw portion of a fixture, and a separating screw portion formed to extend from one end of the coupling screw portion to the outside of the fixture and having a thread formed on the outer circumferential surface thereof; and a remover driver including a separating female screw portion into and to which the separating screw portion of the remover screw is inserted and screwed and in which a thread corresponding to the separating screw portion is formed in the inner circumferential surface thereof, a close coupling portion formed at the lower end of the separating female portion and coming in frictional contact with the upper outer surface of the fixture, and a shank which extends upward from the separating female screw portion and in which a fastening tool is connected to the outer circumferential surface of one end thereof, wherein a thread direction of the coupling screw portion is equal to a thread direction of the female screw portion of the fixture, and a thread direction of the separating screw portion is opposite to the thread direction of the coupling screw portion.

In the implant fixture remover, a fastening torque of the remover screw and the fixture may be in the range of 15 to 100 Ncm and a removing torque of the remover screw and the remover driver may be in the range of 60 to 1000 Ncm.

In the implant fixture remover, a thread direction of the coupling screw portion is equal to a thread direction of the female screw portion of the fixture, and a thread direction of the separating screw portion may be opposite to a direction of a thread formed on the outer surface of the fixture.

The separating screw portion ideally has one or two threads, but may have three or four threads for rapid fastening or strong fastening. The thread shape may be one of triangular, rectangular, trapezoidal, saw-teethed, and round shapes.

In the implant fixture remover, polygonal grooves or protrusions for connection of a screw driver may be formed on the top of the separating screw portion of the remover screw so as to fasten the remover screw to the fixture with a torque of 100 Ncm or less.

In the implant fixture remover, the close coupling portion may include two or more frictional protrusions, two or more grooves, or a saw-toothed shape.

In the implant fixture remover, the close coupling portion may have a shape corresponding to the upper outer shape of the fixture so as to comes in close contact with the top end of the fixture or the upper outer surface of the fixture.

The inner surface of the close coupling portion may have a shape inclined to be widened outward to an end thereof. Selectively, the surface of the close coupling portion may be coated with powders of diamond, metal, or ore or unevenness may be formed in the surface of the close coupling portion.

In the implant fixture remover, the shank may have a shape corresponding to a torque ratchet connection structure for connection to a manual torque ratchet so as to apply a great removing torque to the implant fixture remover. That is, known torque wrenches can be used as the torque ratchet. Here, the shank can be machined in a bolt shape for connection of the torque wrench.

Other features and advantages of the invention will be apparent from the following detailed description.

Terms or words used in the specification and the claims should not be understood to have typical and dictionary meanings, but should be understood to have meanings and concepts suitable for the technical spirit of the invention on the basis of the principle that an inventor can most suitably define the concepts of the terms to explain his invention best.

According to the above-mentioned implant fixture remover, since useless fixtures damaged, destroyed, or having surrounding bone tissues destroyed can be separated and removed from the alveolar bone while minimizing the damage of the alveolar bone with a simple and standardized operation, it is possible to prevent side effects of the operation due to the increasing site of the alveolar bone to be cut off, thereby enhancing the safety of the operation and greatly reducing the time of the operation.

It is possible to plant a new implant with the same diameter just after removing the fixture, and to regenerate the destroyed bone tissue in the top of the fixture.

Although the invention has been applied to the dental field, the invention can be easily applied to plastic surgical and orthopedic fields using a backbone implant or the like.

### BRIEF DESCRIPTION OF THE DRAWINGS

Fig. 1 is a sectional view illustrating an implant fixture remover in an in-use state according to an embodiment of the invention.
Fig. 2 is a sectional view illustrating the implant fixture remover in a separated state shown in Fig. 1.
Fig. 3 is a perspective view illustrating a remover screw of the implant fixture remover according to the embodiment of the invention.
Fig. 4 is a perspective view illustrating an example of a remover driver of the implant fixture remover according to the embodiment of the invention.
Fig. 5 is a perspective view illustrating another example of the remover driver of the implant fixture remover according to the embodiment of the invention.

### DESCRIPTION OF EXEMPLARY EMBODIMENTS

Hereinafter, an implant fixture remover according to an exemplary embodiment of the invention will be described in detail with reference to the accompanying drawings. It should be noted that like elements or components are referenced by like reference numerals in the drawings.

The known functions or configurations are not described in the following description so as not to make the gist of the invention vague.

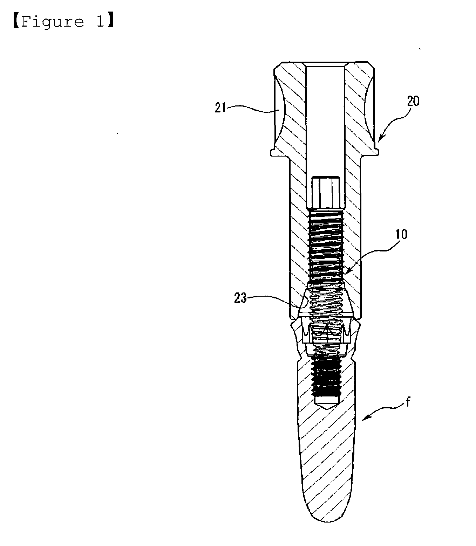

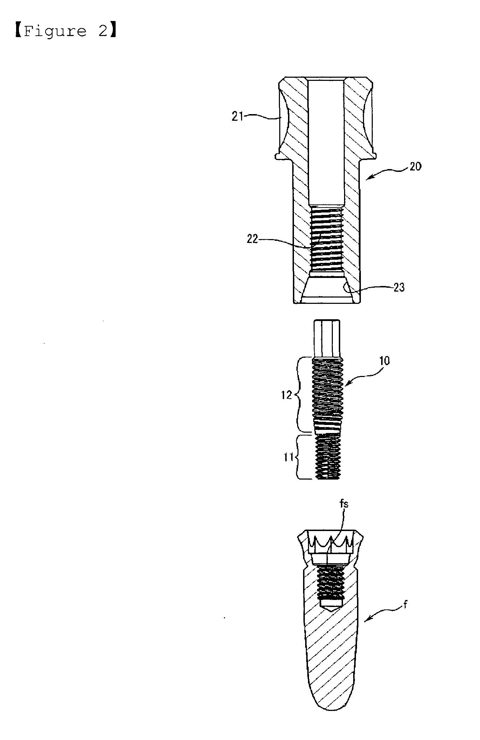

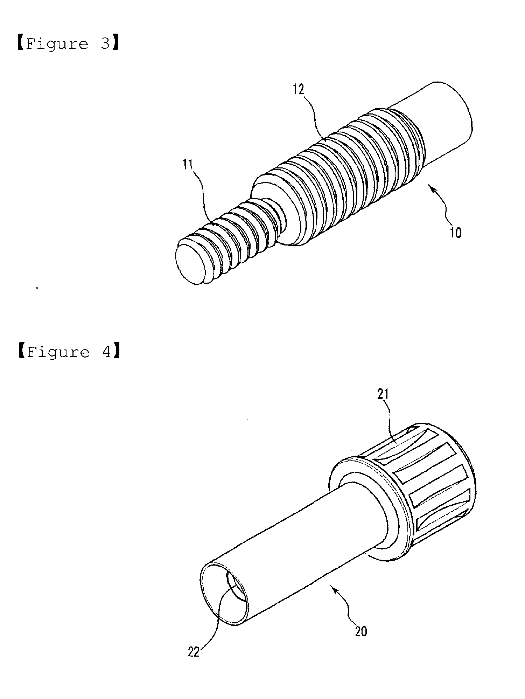

Fig. 1 is a sectional view illustrating an implant fixture remover in an in-use state according to an embodiment of the invention. Fig. 2 is a sectional view illustrating the implant fixture remover in a separated state shown in Fig. 1. Fig. 3 is a perspective view illustrating a remover screw of the implant fixture remover according to the embodiment of the invention. Fig. 4 is a perspective view illustrating an example of a remover driver of the implant fixture remover according to the embodiment of the invention.

First, a fixture f separated and removed by an implant fixture remover according to an embodiment of the invention will be described in brief.

The fixture f is inserted into an alveolar bone and is fused to the bone. In the fixture f, a right-handed thread is formed on the outer circumferential surface so as to be screwed to a compact bone and a cancellous bone, but a left-handed thread may be rarely formed. A groove having an opened top surface with a constant depth is formed in the fixture f, so that an artificial tooth crown (not shown) is screwed thereto. A thread is formed on the inner circumferential surface of the groove, thereby forming a female screw portion fs.

The thread formed on the outer circumferential surface of the fixture f has the same direction as the thread formed in the female screw portion fs. The fixture f is widely known and thus detailed description thereof is not described.

The implant fixture remover according to the embodiment of the invention includes a remover screw 10 having one end in which a thread coupled to the fixture f is formed and the other end in which another thread is formed so as to separate and remove the fixture f with a simple and standardized operation, and a remover driver 20 having one end in which a separating female screw portion 22 of which one end is screwed to the remover screw 10 is formed and the other end in which a shank 21 coupled to a tool such as a socket of a torque ratchet (wrench) or a screw driver.

The remover screw 10 has a double screw shape with a predetermined length. A coupling screw portion 11 screwed to the female screw portion fs of the fixture f is formed at one end thereof, and a separating screw portion 12 processed into a thread opposite to the thread of the coupling screw portion 11 and screwed to the separating female screw portion 22 of the remover driver 20 is formed at the other end. That is, in the remover screw 10 according to the embodiment of the invention, the thread direction of the coupling screw portion 11 is opposite to the thread direction of the separating screw portion 12. That is, it is preferable that the separating screw portion 12 is formed as a left-handed screw when the coupling screw portion 11 is a right-handed screw, and the separating screw portion 12 is formed as a right-handed screw when the coupling screw portion 11 is a left-handed screw.

In the invention, the thread directions of the coupling screw portion 11, the fixture f, and the separating screw portion 22 may be set in various combinations.

In an example, the thread direction of the coupling screw portion 11 is equal to the thread direction of the female screw portion fs of the fixture f, and the thread direction of the separating screw portion 22 is opposite to the thread direction formed on the outer surface of the fixture f.

In another example, the thread direction of the coupling screw portion 11 is equal to the thread direction of the female screw portion of the fixture f, and the thread direction of the separating screw portion 22 is opposite to the thread direction of the coupling screw portion 11.

In another example, the thread direction of the coupling screw portion 11 is equal to the thread direction of the female screw portion of the fixture f, and the thread direction of the separating screw portion 22 is equal to the thread direction of the coupling screw portion 11.

In the remover screw 10 according to this embodiment, the coupling screw portion 11 has a diameter smaller than that of the separating screw portion 12. However, the invention is not limited to this configuration, but the coupling screw portion 11 and the separating screw portion 12 may have the same diameter, or the separating screw portion 12 may have a diameter smaller than the coupling screw portion 11.

The thread pitch of the coupling screw portion 11 is equal to the thread pitch of the screw groove in the fixture to be removed, and the thread pitch, the number of threads, or the thread shape of the separating screw portion 12 can be variously modified in design, and are not particularly limited.

The separating screw portion 12 of the remover screw 10 is inserted into and screwed to the remover driver 20. The remover driver 20 includes a separating female screw portion 22 having a groove shape opened to the downside and having a thread formed on the inner circumferential surface thereof, and a shank 21 extending to one side of the separating screw portion 22 and coupled to a socket of a torque ratchet (wrench). The shank 21 may be formed in a bolt shape with a coupling structure to a known torque ratchet, or may be formed in a screw groove shape for coupling to a screw driver. The connection structure of the fastening tool is known widely, and thus detailed description thereof is not made.

The bottom surface of the remover driver 20 is opened and a thread is formed on the inner circumferential surface thereof, thereby forming the separating female screw portion 22 screwed to the separating screw portion 12. The separating female screw portion 22 has a thread shape corresponding to the separating screw portion 12.

In this configuration, when the remover driver 20 is driven in a direction for removing the fixture f with the ratchet, the remover driver 20 goes down toward the fixture f in the thread direction of the separating screw portion 22, comes in close contact with the top portion of the fixture f, and is coupled thereto with a strong frictional force. As a result, the fixture f and the remover driver 20 are separated and removed as a body from the alveolar bone.

The shank 21 is formed at one end of the separating female screw portion 22. The shank 21 is a portion coupled to a tool such as a ratchet or a wrench. The tool has a shape which can be connected to a screw fastening and loosening tool such as a driver or a manual torque wrench. A torque gauge may be built in the torque wrench. The tool is known widely and thus detailed description thereof is not made.

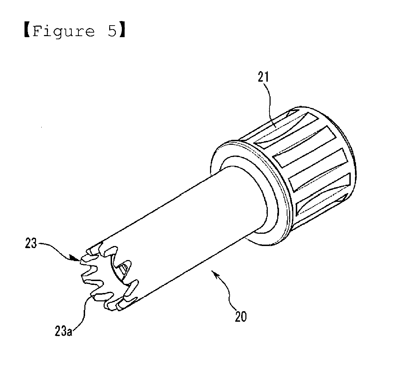

Fig. 5 is a perspective view illustrating another example of the remover driver of the implant fixture remover according to the embodiment of the invention. As shown in the drawing, a close coupling portion 23 is formed at an end of the separating screw portion 12 so that the end surface of the remover driver 20 can come in strong frictional contact with the upper outer surface of the fixture f in the state where the remover driver 20 is completely fastened to the separating screw portion 12.

As shown in the drawing, the close coupling portion 23 according to this embodiment is formed in the form of protrusions 23a protruding to the end surface of the fixture f at a constant interval. On the other hand, the frictional protrusions 23 are provided in a directional saw-toothed shape, as shown in the drawing, so that the friction protrusion 23 comes in close contact with the top of the fixture f to apply a frictional force in a drive-in direction when the remover driver 20 is driven in the direction for pulling out the fixture f.

In addition to the structure in which the close coupling portion 23 is formed to simply protrude, metal powder or diamond powder with high hardness may be attached to the frictional protrusions 23a to form a coating layer, or the surface of the close coupling portion 23 may be roughened to enhance the friction force of the close coupling portion 23, whereby the remover driver 20 can be used to easily remove the fixture f. On the other hand, the method of forming a coating layer on the surface of the frictional protrusions 23a out of metal or diamond powder or roughening the surface is known well and thus detailed description thereof is not made.

Instead of the frictional protrusions 23a, two or more grooves may be formed in the close coupling portion 23 or the close coupling portion 23 may be formed in a cone shape or saw-toothed shape which is widened downward so as to come in maximum contact with the upper outer surface of the fixture.

The fastening torque of the remover screw 10 and the fixture f is preferably in the range of 15 Ncm to 60 Ncm, and the fastening torque of the remover screw 10 and the remover driver 20 is preferably in the range of 60 Ncm to 1000 Ncm.

When the fastening torque of the remover screw 10 and the fixture f is less than 15 Ncm, no force is applied to the remover driver 20 at the time of removing the fixture and the remover screw 10 may be loosened from the fixture f. When the fastening torque is greater than 61 Ncm, the remover screw 10 may be deformed or destroyed.

When the fastening torque of the remover screw 10 and the remover driver 20 is less than 60 Ncm, the remover driver 20 does not work. When the fastening torque is greater than 1000 Ncm, the remover driver 20 may be deformed and the remover screw 10 may be deformed or destroyed.

The operation using the implant fixture remover according to the embodiment of the invention having the above-mentioned configuration will be described now.

To remove the fixture f planted into an alveolar bone, first, prostheses such as an abutment and an artificial tooth crown coupled to the fixture f are removed.

Subsequently, the coupling screw portion 11 of the remover screw 10 is screwed to the female screw portion fs of the fixture f within an allowable torque range, the separating female screw portion 22 of the remover driver 20 is screwed to the separating screw portion 12 of the remover screw 10.

To couple the separating screw portion 12 to the separating female screw portion 22, the shank 21 of the remover driver 20 is slowly turned in the direction for removing the fixture f by the use of a ratchet tool such as a torque wrench. Then, the remover driver 20 comes in close contact with the fixture f, and the fixture f is turned in the direction for removing the fixture from the alveolar bone without being loosely turned, whereby the fixture f is separated and removed.

At this time, the removing torque is preferably in the range of 100 Ncm to 1000 Ncm depending on the type and size of the fixture. A sufficient amount of water should be supplied around the fixture to suppress the generation of heat.

The invention is not limited to the above-mentioned embodiment, but may be applied to various sites.

## Claims

1. An implant fixture remover for removing an implant fixture from a biological bone, comprising:
a remover screw (10) including
a coupling screw portion (11) screwable to a female screw portion of a fixture, and
a separating screw portion (12) formed to extend from one end of the coupling screw portion (11) to the outside of the fixture and having a thread formed on the outer circumferential surface thereof, and a thread direction of the separating screw portion (12) is opposite to the thread direction of the coupling screw portion (11); and
a remover driver (20) including
a separating female screw portion (22) into and to which the separating screw portion (12) of the remover screw (10) is inserted and screwed and in which a thread corresponding to the separating screw portion (12) is formed in the inner circumferential surface thereof,
a close coupling portion (23) formed at the lower end of the separating female portion (22) and configured to come into frictional contact with the upper outer surface of the fixture, and
a shank (21) which extends upward from the separating female screw portion (22) and in which a fastening tool is connectable to thereof.

2. The implant fixture remover according to claim 1, wherein a thread direction of the coupling screw portion (11) is equal to a thread direction of the female screw portion of the fixture, and a thread direction of the separating screw portion (12) is equal to the thread direction of the coupling screw portion (11).

3. The implant fixture remover according to claim 1, wherein the separating screw portion (12) is a screw having 1 to 4 threads.

4. The implant fixture remover according to claim 1, wherein a thread shape of the separating screw portion (12) is one of triangular, rectangular, trapezoidal, saw-teethed, and round shapes.

5. The implant fixture remover according to claim 1, wherein a structure for connection to a screw driver as a fastening tool is formed in the top portion of the separating screw portion (12) of the remover screw (10).

6. The implant fixture remover according to claim 1, wherein the close coupling portion (23) includes two or more frictional protrusions.

7. The implant fixture remover according to claim 1, wherein the close coupling portion (23) includes two or more grooves.

8. The implant fixture remover according to claim 1, wherein the close coupling portion (23) has a saw-teethed shape.

9. The implant fixture remover according to claim 1, wherein the close coupling portion (23) has a shape corresponding to the upper outer shape of the fixture so as to comes in close contact with the top end of the fixture or the upper outer surface of the fixture.

10. The implant fixture remover according to claim 1, wherein the inner surface of the close coupling portion (23) has a shape inclined to be widened outward to an end thereof.

11. The implant fixture remover according to claim 1, wherein the surface of the close coupling portion (23) is coated with powders of diamond, metal, or ore or unevenness is formed in the surface of the close coupling portion (23).

## Patentansprüche

1. Vorrichtung zum Entfernen eines Implantathalters, mit der ein Implantathalter aus einem biologischen Knochen entfernt wird, wobei sie umfasst::
eine Entfernungs-Schraube (10), die enthält:
einen Verbindungs-Schraubenabschnitt (11), der in einen Innengewindeabschnitt eines Halters eingeschraubt werden kann, und
einen Trenn-Schraubenabschnitt (12), der so ausgebildet ist, dass er sich von einem Ende des Verbindungs-Schraubenabschnitts (11) zu der Außenseite des Halters erstreckt, und der ein Gewinde aufweist, das an seiner Außenumfangsfläche ausgebildet ist, wobei eine Gewinderichtung des Trenn-Schraubenabschnitts (12) entgegengesetzt zu der Gewinderichtung des Verbindungs-Schraubenabschnitts (11) ist; und
einen Entfernungs-Dreher (20), der enthält:
einen Trenn-Innengewindeabschnitt (22), in den und an den der Trenn-Schraubenabschnitt (12) der Entfernungs-Schraube (10) eingeführt bzw. angeschraubt wird und in dem ein Gewinde, das dem Trenn-Schraubenabschnitt (12) entspricht, in seiner Innenumfangsfläche ausgebildet ist,
einen Abschnitt (23) zum Herstellen enger Verbindung, der an dem unteren Ende des Trenn-Innengewindeabschnitts (22) ausgebildet und so eingerichtet ist, dass er in Reibkontakt mit der oberen Außenfläche des Halters kommt, und
einen Schaft (21), der sich von dem Trenn-Innengewindeabschnitt (22) nach oben erstreckt und in dem ein Befestigungswerkzeug damit verbunden werden kann.

2. Vorrichtung zum Entfernen eines Implantathalters nach Anspruch 1, wobei eine Gewinderichtung des Verbindungs-Schraubenabschnitts (11) einer Gewinderichtung des Innen-Gewindeabschnitts des Halters gleich ist und eine Gewinderichtung des Trennschrauben-Abschnitts (12) der Gewinderichtung des Verbindungs-Schraubenabschnitts (11) gleich ist.

3. Vorrichtung zum Entfernen eines Implantathalters nach Anspruch 1, wobei der TrennSchraubenabschnitt (12) eine Schraube mit einem bis vier Gewindegang/Gewindegängen ist.

4. Vorrichtung zum Entfernen eines Implantathalters nach Anspruch 1, wobei eine Gewindeform des Trenn-Schraubenabschnitts (12) dreieckig, rechteckig, trapezartig, sägezahnartig oder rund ist.

5. Vorrichtung zum Entfernen eines Implantathalters nach Anspruch 1, wobei eine Struktur zur Verbindung mit einem Schraubendreher als einem Befestigungswerkzeug in dem oberen Abschnitt des Trenn-Schraubenabschnitts (12) der Entfernungs-Schraube (10) ausgebildet ist.

6. Vorrichtung zum Entfernen eines Implantathalters nach Anspruch 1, wobei der Abschnitt (23) zum Herstellen enger Verbindung zwei oder mehr Reibvorsprünge enthält.

7. Vorrichtung zum Entfernen eines Implantathalters nach Anspruch 1, wobei der Abschnitt (23) zum Herstellen enger Verbindung zwei oder mehr Nuten enthält.

8. Vorrichtung zum Entfernen eines Implantathalters nach Anspruch 1, wobei der Abschnitt (23) zum Herstellen enger Verbindung eine Sägezahn-Form hat.

9. Vorrichtung zum Entfernen eines Implantathalters nach Anspruch 1, wobei der Abschnitt (23) zum Herstellen enger Verbindung eine Form hat, die der oberen Außenform des Halters entspricht, so dass er in engen Kontakt mit dem oberen Ende des Halters oder der oberen Außenfläche des Halters kommt.

10. Vorrichtung zum Entfernen eines Implantathalters nach Anspruch 1, wobei die Innenfläche des Abschnitts (23) zum Herstellen enger Verbindung eine Form hat, die so abgeschrägt ist, dass sie sich zu einem Ende desselben hin aufweitet.

11. Vorrichtung zum Entfernen eines Implantathalters nach Anspruch 1, wobei die Oberfläche des Abschnitts (23) zum Herstellen enger Verbindung mit Pulvern aus Diamant, Metall oder Erz beschichtet ist oder Unebenheiten in der Oberfläche des Abschnitts (23) zum Herstellen enger Verbindung ausgebildet sind.

## Revendications

1. Extracteur pour fixation d'implant pour l'extraction d'une fixation d'implant d'un os biologique, ledit extracteur comprenant :
une vis d'extraction (10) comprenant
une partie vis de couplage (11) pouvant être vissée à une partie vis femelle d'une fixation, et
une partie vis de séparation (12) formée pour s'étendre d'une extrémité de la partie vis de couplage (11) jusqu'à l'extérieur de la fixation et sur la surface circonférentielle extérieure de laquelle un filetage est formé, et une direction de filetage de la partie vis de séparation (12) est opposée à la direction de filetage de la partie vis de couplage (11) ; et
un dispositif d'entraînement d'extraction (20) comprenant
une partie vis femelle de séparation (22) dans laquelle la partie vis de séparation (12) de la vis d'extraction (10) est insérée et à laquelle elle est vissée et dans la surface circonférentielle intérieure de laquelle un filetage correspondant à la partie vis de séparation (12) est formé,
une partie de couplage serré (23) formée au niveau de l'extrémité inférieure de la partie femelle de séparation (22) et configurée pour entrer en contact frictionnel avec la surface extérieure supérieure de la fixation, et
une tige (21) qui s'étend vers le haut depuis la partie vis femelle de séparation (22) et à laquelle un outil de serrage peut être raccordé.

2. Extracteur de fixation d'implant selon la revendication 1, dans lequel une direction de filetage de la partie vis de couplage (11) correspond à une direction de filetage de la partie vis femelle de la fixation, et une direction de filetage de la partie vis de séparation (12) correspond à la direction de filetage de la partie vis de couplage (11).

3. Extracteur de fixation d'implant selon la revendication 1, dans lequel la partie vis de séparation (12) est une vis ayant de 1 à 4 filetages.

4. Extracteur de fixation d'implant selon la revendication 1, dans lequel une forme de filetage de la partie vis de séparation (12) est l'une des formes triangulaire, rectangulaire, trapézoïdale, en dents de scie, et ronde.

5. Extracteur de fixation d'implant selon la revendication 1, dans lequel une structure à raccorder à un tournevis comme un outil de serrage est formée sur la partie supérieure de la partie vis de séparation (12) de la vis d'extraction (10).

6. Extracteur de fixation d'implant selon la revendication 1, dans lequel la partie de couplage serré (23) comprend deux protubérances frictionnelles ou plus.

7. Extracteur de fixation d'implant selon la revendication 1, dans lequel la partie de couplage serré (23) comprend deux sillons ou plus.

8. Extracteur de fixation d'implant selon la revendication 1, dans lequel la partie de couplage serré (23) a une forme en dents de scie.

9. Extracteur de fixation d'implant selon la revendication 1, dans lequel la partie de couplage serré (23) a une forme correspondant à la forme extérieure supérieure de la fixation pour entrer en contact serré avec l'extrémité supérieure de la fixation ou la surface extérieure supérieure de la fixation.

10. Extracteur de fixation d'implant selon la revendication 1, dans lequel la surface intérieure de la partie de couplage serrée (23) a une forme inclinée pour être plus large vers l'extérieur jusqu'à une extrémité de celle-ci.

11. Extracteur de fixation d'implant selon la revendication 1, dans lequel la surface de la partie de couplage serré (23) est revêtue de poudres de diamant, de métal, ou de minerai ou une irrégularité est formée dans la surface de la partie de couplage serré (23).
